# EUROPÄISCHE PATENTSCHRIFT

(11) **EP 2 199 185 B1**
(45) Veröffentlichungstag und Bekanntmachung des Hinweises auf die Patenterteilung: **05.01.2011**
(21) Anmeldenummer: 09175222.0
(22) Anmeldetag: 06.11.2009
(51) Int. Cl.: B62D 5/00

(54) **Verfahren zum Bestimmen der mechanischen Mitte einer Zahnstange**
Method for determining the mechanical centre position of a rack shaft
Procédé de détermination de la position centrale mécanique d'une crémaillère

(30) Priorität: 17.12.2008 DE 102008054823
(43) Veröffentlichungstag der Anmeldung: 23.06.2010
(73) Patentinhaber: ZF Lenksysteme GmbH, 73527 Schwäbisch Gmünd (DE)
(72) Erfinder: Weber, Markus, 73035, Göppingen (DE); Bönsch, Michael, 73540, Heubach (DE); Heilig, Arnulf, 73529, Schwäbisch Gmünd (DE)

(56) Entgegenhaltungen:
- EP-A1- 1 332 943
- EP-A2- 1 394 015
- WO-A1-2005/028283
- DE-A1- 4 129 731
- DE-A1- 19 508 708

## Beschreibung

Die Erfindung betrifft ein Verfahren zum Bestimmen der mechanischen Mitte einer Zahnstange in einer hilfskraftunterstützten Zahnstangenlenkung mit variabler Lenkübersetzung.

In einer solchen Lenkung wandelt die Zahnstange die Drehbewegung der Lenkwelle über die verbleibenden kurzen Spurstangen und Hebel in eine Schwenkbewegung der Räder um. Eine derartige Lenkung ist insbesondere für Personenkraftwagen geeignet und ermöglicht eine gut fühlbare Rückstellung und eine relativ direkte Übersetzung mit geringen Reibungsverlusten.

Bei der Lenkung greift ein über die Lenkwelle mit dem Lenkrad verbundenes Zahnrad in eine Zahnstange. Durch Drehen des Lenkrads wird die Zahnstange verschoben und schwenkt dadurch die angelenkten Räder. Hierbei wird sie üblicherweise von einem Druckstück durch eine Feder gegen das Zahnrad gedrückt. Dies sorgt für eine fast spielfreie Verbindung. Die Zahnstange kann dabei eine von der Mitte nach außen hin kleiner werdende Zahnteilung haben, die eine variable Übersetzung ermöglicht. Dadurch wird die Lenkung in der Mitte direkter, während bei vollem Lenkeinschlag weniger Kraftaufwand nötig ist.

Bei einer Hilfskraftlenkung bzw. EPS (EPS: Electronic Power Steering) mit variabler Lenkübersetzung ist der Weg der Zahnstange und der Lenkwinkel am Lenkrad nicht proportional zueinander. Auch aus diesem Grunde ist es notwendig, die Lenkung richtig einzustellen, so dass bei nicht eingeschlagenem Lenkrad, d.h. bei einem Lenkwinkel von 0°, der Hub der Zahnstange den Wert 0 hat, so dass ein korrekter Geradeauslauf des gelenkten Fahrzeugs sichergestellt ist.

Diese Einstellung wird üblicherweise im Werk vorgenommen. Allerdings kann es durch bestehende Toleranzen und durch äußere Einflüsse hier zu Abweichungen kommen. So ist es ggf. erforderlich, die Lenkung nachzujustieren, um zu gewährleisten, dass die Spur richtig eingestellt ist. Ansonsten resultiert ein unsymmetrisches Lenkverhalten.

Dabei ist problematisch, dass der absolute Hub der Zahnstange nicht direkt messbar ist.

Die Druckschrift EP 1 332 943 A1 beschreibt eine Hilfskraftlenkung, bei der ein Mittel zur Bestimmung eines neutralen Winkels vorgesehen ist. Hierbei wird während der Fahrt basierend auf einem Abtastwert des Lenkwinkels der neutrale Winkel mit einem Estimationsmittel abgeschätzt.

Die Druckschrift EP 1 394 015 A2 offenbart eine Hilfskraftlenkung mit einem Steuersystem, mit dem ein Verhältnis zwischen einem Lenkwinkel und einem Winkel eines angelenkten Rads flexibel eingestellt werden kann. Hierbei wird mit einem ersten Motor eine Lenkreaktionskraft am Lenkrad kontrolliert und mit einem Bestimmungsabschnitt bestimmt, ob das Lenkrad ohne Lenkeinschlag ist. Weiterhin wird eine Kraft am Rad erfasst. Ziel ist es, das Lenkgefühl und die Steuerbarkeit bei der Hilfskraftlenkung zu verbessern.

Die Druckschrift DE 195 08 708 betrifft ein gattungsgemäßes Lenksystem mit variablem Lenkverhältnis, das ein Verhältnis eines Lenkwinkels lenkbarer Räder zu einem Lenkwinkel eines Lenkrads ändern kann. Bei diesem ist eine Eingangswelle von einem Tragelement drehend gehalten, das wiederum von einem Gehäuse drehend gehalten ist.

Der Druckschrift DE 41 29 731 A1 ist ein Lenksystem mit variablem Lenkverhältnis zu entnehmen. Das Lenksystem umfasst eine mit dem Lenkrad gekoppelte Eingangswelle, eine erste Kugelumlaufeinrichtung mit einer über Kugeln auf der Eingangswelle in Gewindeeingriff stehenden ersten Nuss, eine Ausgangswelle, eine zweite Kugelumlaufeinrichtung mit einer über Kugeln mit der Ausgangswelle in Gewindeeingriff stehenden zweiten Nuss und eine Lenkwinkelverhältnis-Einstelleinrichtung.

Aus der Druckschrift WO 2005/02823 A1 ist ein Lenkgetriebe mit Zahnstangenritzel bekannt, das eine Eingangswelle umfasst, die um eine erste Achse drehbar ist und dazu ausgelegt ist, eine Steuereingabe für das Lenkgetriebe bereitzustellen. Ein Ritzel ist dafür vorgesehen eine Änderung im Steuerwinkelverhältnis zu bewirken.

Das vorgestellte Verfahren dient zum Bestimmen der mechanischen Mitte einer Zahnstange in einer hilfskraftunterstützten Lenkung mit variabler Lenkübersetzung gemäß Anspruch 1. Bei diesem wird das Verhältnis zwischen Lenkwinkel und Hubänderung zur Bestimmung des absoluten Hubs der Zahnstange herangezogen. Es wird somit ausgenutzt, dass bei einer variablen Lenkübersetzung die Änderung des Hubs mit Änderung des Lenkwinkels abhängig vom eingestellten Lenkwinkel ist. Jenach dem welcher Lenkwinkel eingestellt ist, bewirkt eine Änderung des Lenkwinkels eine bestimmte Änderung des Hubs.

Das Verfahren kann dadurch zur Justierung der Zahnstange eingesetzt werden. In diesem Fall kann eine Bestimmung des Lenkwinkels, der einem Hub der Zahnstange bei einem Geradeauslauf zugeordnet ist, durchgeführt werden.

Die Lenhung weist eine Lenkhandhabe, eine Lenkwelle und eine Zahnstange auf und zusätzlich eine erste Einrichtung zur Aufnahme eines mit der Lenkhandhabe eingestellten Lenkwinkels und eine zweite Einrichtung zur Aufnahme der Hubänderung der Zahnstange vorgesehen ist.

Das vorgestellte Verfahren nützt somit die Tatsache, dass eine Hilfskraftlenkung mit variabler Lenkübersetzung einen charakteristischen Verlauf der Übersetzung zwischen Lenkwinkel und Änderung des Hubs hat. Der Hub muss daher nicht direkt bestimmt werden.

Auf diese Weise kann festgestellt werden, wo die Mitte der Zahnstange ist, damit bei Geradeausfahrt das Lenkverhalten links und rechts symmetrisch ist.

Die Erfindung betrifft weiterhin ein Computerprogramm mit Programmcodemitteln, um ein vorstehend beschriebenes Verfahren durchzuführen, wenn das Computerprogramm auf einem Mikroprozessor eines Computers in einem Steuergerät der Hilfskraftlenkung, ausgeführt wird.

Das weiterhin vorgestellte Computerprogrammprodukt umfasst eben diese Programmcodemittel, die auf einem computerlesbaren Datenträger gespeichert sind.

Das Computerprogramm kann auf einem computerlesbaren Datenträger, wie bspw. Diskette, CD, DVD, Festplatte, USB-Memory-Stick oder ähnliches, oder einem Internetserver als Computerprogrammprodukt gespeichert sein und von dort aus in das Speicherelement des Steuergeräts übertragen werden.

Die Erfindung ist anhand von Ausführungsbeispielen in der Zeichnung schematisch dargestellt und wird im Folgenden unter Bezugnahme auf die Zeichnung ausführlich beschrieben.
- Figur 1: zeigt eine Ausführungsform der erfindungsgemäßen Hilfskraftlen- kung.
- Figur 2: zeigt in einem Graphen die Beziehung zwischen Lenkwinkel und Motorwinkeländerung.

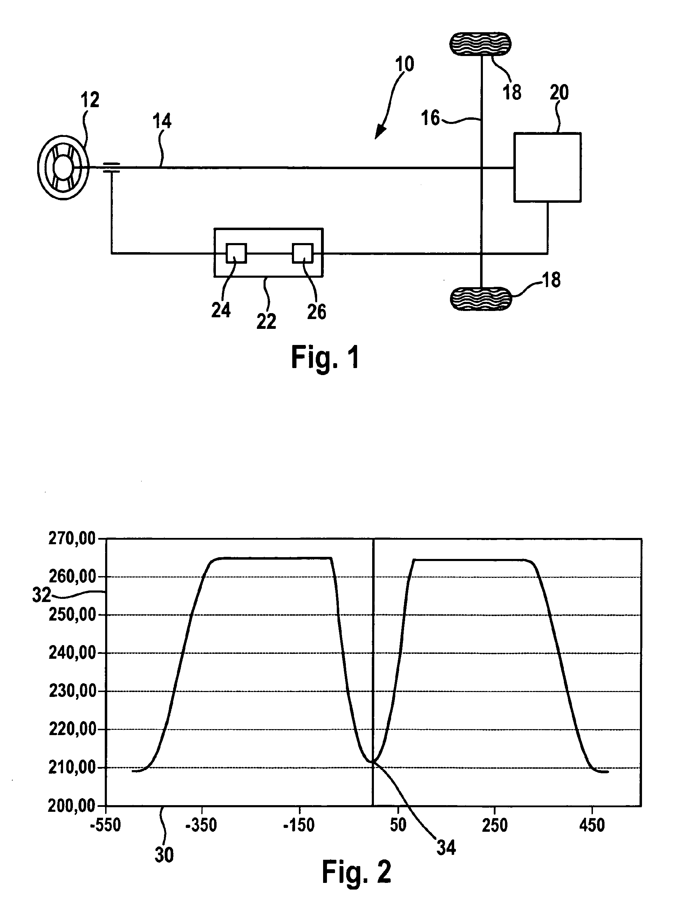

In Figur 1 ist eine mögliche Ausführung der beschriebenen Hilfskraftlenkung dargestellt, die insgesamt mit der Bezugsziffer 10 bezeichnet ist. Die Darstellung zeigt eine Lenkhandhabe 12, eine Lenkwelle 14, eine Zahnstange 16 und zwei angelenkte Räder 18. Weiterhin ist ein Motor 20 und ein Steuergerät 22 vorgesehen. In dem Steuergerät 22 ist eine erste Einrichtung 24 zur Aufnahme eines Lenkwinkels, der mit der Lenkhandhabe 12 eingestellt wird, und eine zweite Einrichtung 26 zur Aufnahme einer Änderung des Hubs der Zahnstange 16 bzw. einer Motorwinkeländerung enthalten.

Mit der Lenkhandhabe 12 kann der Fahrer über die Lenkwelle 14 und die Zahnstange 16 den Winkel der Räder 18 einstellen. Die Drehung der Lenkwelle 14 wird dabei in eine translatorische Bewegung der Zahnstange 16 übersetzt.

Das Steuergerät 22 erfasst mit der ersten Einrichtung 24 den Lenkwinkel und den Verlauf des Lenkwinkels und somit auch die Lenkwinkeländerung und mit der zweiten Einrichtung 26 die Änderung des Hubs der Zahnstange 16.

In Figur 2 ist das Verhältnis zwischen Lenkwinkel und Motorwinkeländerung in einem Graphen dargelegt. An der Abszisse 30 ist dabei der Lenkwinkel und an der Ordinate 32 die Motorwinkeländerung aufgetragen. Die Motorwinkeländerung steht dabei in unmittelbarer Beziehung zu der Hubänderung der Zahnstange.

Wie bereits betont wurde, ist es von Bedeutung zu bestimmen, wo die Mitte der Zahnstange ist, damit bei Geradeausfahrt das Lenkverhalten links und rechts symmetrisch ist. Der dargestellte Graph und damit das wiedergegebene Verhältnis zwischen Lenkwinkel- und Motorwinkeländerung bzw. Hubänderung kann dazu verwendet werden. So kann innerhalb eines Lenkwinkels von +/-150° der Übersetzungstiefpunkt 34 gesucht werden, bspw. mittels Software-Schleppzeiger, um die mechanische Mitte der Zahnstange zu ermitteln.

Das vorgestellte Verfahren ermöglicht eine indirekte Bestimmung des Hubs der Zahnstange und erleichtert somit ein nachträgliches Justieren der Zahnstange, so dass trotz bestehender Toleranzen ein symmetrisches Lenkverhalten gewährleistet werden kann. Zur Bestimmung der Hubänderung kann der ohnehin vorgesehene Motor 20 (Figur 1) genutzt werden.

## Patentansprüche

1. Verfahren zum Bestimmen der mechanischen Mitte einer Zahnstange (16) in einer Hilfskraftlenkung (10) mit variabler Lenkübersetzung, wobei die Zahnstange (16) eine Zahnteilung hat, die die variable Übersetzung ermöglicht **dadurch gekennzeichnet, dass**
eine erste Einrichtung (24) zur Aufnahme eines Lenkwinkels und einer Lenkwinkeländerung und eine zweite Einrichtung (26) zur Aufnahme einer Motorwinkeländerung, die in unmittelbarer Beziehung zu der Hubänderung der Zahnstange (16) steht, vorgesehen sind, das Verhältnis der Lenkwinkeländerung zur Hubänderung der Zahnstange (16) zur Bestimmung des absoluten Hubs der Zahnstange (16) herangezogen wird, wobei das Verfahren auf Grundlage eines Graphen, der das Verhältnis zwischen Lenkwinkel- und Motorwinkeländerung wiedergibt, durchgeführt wird.

2. Verfahren nach Anspruch 1, das zur Justierung der Zahnstange (16) eingesetzt wird.

3. Verfahren nach Anspruch 2, mit dem eine Bestimmung des Lenkwinkels, der einem Hub der Zahnstange (16) bei einem Geradeauslauf zugeordnet ist, durchgeführt wird.

4. Computerprogramm mit Programmcodemitteln, um ein Verfahren gemäß einem der Ansprüche 1 bis 3 durchzuführen, wenn das Computerprogramm auf einem Mikroprozessor eines Computers in einem Steuergerät (22) der Hilfskraftlenkung (10), ausgeführt wird.

5. Computerprogrammprodukt mit Programmcodemitteln, die auf einem computerlesbaren Datenträger gespeichert sind, um ein Verfahren gemäß einem der Ansprüche 1 bis 3 durchzuführen, wenn das Computerprogramm auf einem Mikroprozessor eines Computers in einem Steuergerät (22) der Hilfskraftlenkung (10), ausgeführt wird.

## Claims

1. Method for determining the mechanical centre of a rack (16) in a power steering system (10) with a variable steering transmission ratio, the rack (16) having a tooth spacing which makes the variable transmission ratio possible, **characterized in that** a first device (24) is provided for recording a steering angle and a steering-angle change and a second device (26) is provided for recording a motor-angle change which has a direct relationship to the stroke change of the rack (16), and the ratio of the steering-angle change to the stroke change of the rack (16) is used to determine the absolute stroke of the rack (16), the method being carried out on the basis of a graph which depicts the ratio between the steering-angle change and the motor-angle change.

2. Method according to Claim 1, which method is used for adjusting the rack (16).

3. Method according to Claim 2, by way of which method a determination of the steering angle which is assigned to a stroke of the rack (16) while driving straight ahead is carried out.

4. Computer program having program code means for carrying out a method according to one of Claims 1 to 3 when the computer program is executed on a microprocessor of a computer in a control unit (22) of the power steering system (10).

5. Computer program product having program code means which are stored on a computer-readable data storage medium for carrying out a method according to one of Claims 1 to 3 when the computer program is executed on a microprocessor of a computer in a control unit (22) of the power steering system (10).

## Revendications

1. Procédé de détermination du milieu mécanique d'une crémaillère (16) d'une direction assistée (10) à taux variable de conversion de braquage, la crémaillère (16) présentant un pas de dent qui permet le taux de conversion variable,
**caractérisé en ce que**
un premier dispositif (24) d'enregistrement d'un angle de braquage et d'une modification de l'angle de braquage et un deuxième dispositif (26) d'enregistrement d'une modification de l'angle moteur qui est en rapport direct avec la modification de la course de la crémaillère (16) sont prévus,
le rapport entre la modification de l'angle de braquage et la modification de course de la crémaillère (16) étant utilisé pour déterminer la course absolue de la crémaillère (16),
le procédé étant exécuté sur base d'un graphique qui reproduit le rapport entre la modification de l'angle de direction et la modification de l'angle du moteur.

2. Procédé selon la revendication 1, utilisé pour ajuster la crémaillère (16).

3. Procédé selon la revendication 2, qui détermine l'angle de braquage associé à la course de la crémaillère (16) lors d'une sortie en ligne droite.

4. Programme informatique doté de moyens de code de programme qui exécute un procédé selon l'une des revendications 1 à 3 lorsque le programme informatique est exécuté sur un microprocesseur d'un ordinateur dans un appareil de commande (22) de la direction assistée (10).

5. Produit de programme informatique doté de moyens de code de programme conservés en mémoire sur un support de données lisibles par ordinateur et qui exécute un procédé selon l'une des revendications 1 à 3 lorsque le programme informatique est exécuté sur un microprocesseur d'un ordinateur dans un appareil de commande (22) de la direction assistée (10).
